# EUROPEAN PATENT APPLICATION

(11) **EP 4 036 022 A1**
(43) Date of publication of application: **03.08.2022**
(21) Application number: 22154451.3
(22) Date of filing: 01.02.2022
(51) Int. Cl.: B65B 39/00, B65B 25/00, B65B 25/06, B65B 55/22, B65B 9/20, B65B 35/10, B65B 51/30, B29C 65/02, B29C 65/00, B65D 30/20, B65B 9/207, B65B 9/213, B65B 9/22

(54) **MACHINE AND METHOD FOR PACKAGING DAIRY PRODUCTS**

(30) Priority: 01.02.2021 IT 202100002024
(71) Applicant: Pentavac S.r.l., 25030 Comezzano-Cizzago, Brescia (IT)
(72) Inventor: GOZZINI, Sergio, 25030 Comezzano-Cizzago, BRESCIA (IT)
(74) Representative: Chimini, Francesco

(57) **Abstract**

This invention relates to a machine (1) for packaging dairy products, comprising a forming tube (2) and a welding apparatus (7).

The forming tube (2) internally delimits a cavity (20) for the passage of a preserving liquid (3) and at least one dairy product (4) and is suitable to be wrapped by a film (5) for making a package (6) for said dairy product (4). The package (6) is suitable to be hermetically sealed by a lower edge (6b) and an upper edge (6a). In addition, the forming tube (2) is provided with adjustment means (21) movable between an open position, for passage of the dairy product (4) through the forming tube (2), and a closed position, for blocking the dairy product (4).

The welding apparatus (7) comprises a pair of welding heads (7a, 7b), is arranged downstream of the adjustment means (21) and is configured to weld the film (5) to obtain the package (6). The welding apparatus (7) may be moved between an inactive position, wherein the two welding heads (7a, 7b) are spaced apart from each other, and an active position, wherein the two welding heads (7a, 7b) cooperate to weld the lower edge (6b) and/or the upper edge (6a).

The welding apparatus (7) and the adjustment means (21) may be commanded in such a way that when the welding apparatus (7) is in the active position, the adjustment means (21) are in the closed position, and when the welding apparatus (7) is in the inactive position, the adjustment means (21) are in the open position.

## Description

This invention is in the field of packaging for dairy products. In particular, a machine and a method for packaging dairy products form the subject matter of this invention.

As is known, for the packaging of a dairy product, for example a mozzarella cheese, a film made of a material belonging to the polymer family is used. This film is properly welded in order to form a package wherein, in addition to the mozzarella, a preserving liquid is also added.

In order for the mozzarella to be preserved in the best condition and to have the longest possible shelf-life, two requirements must be met, i.e., the mozzarella must be substantially submerged in the preserving liquid and the ratio by weight between the mozzarella and the preserving liquid must be 1:1.

Experimentally it has been observed that if the mozzarella is not completely submerged in the preserving liquid, the portion of mozzarella which remains uncovered will oxidize, compromising the quality of the dairy product.

If on the other hand the optimal ratio in weight between the mozzarella and the preserving liquid is not respected, and thus there is too much preserving liquid, an osmotic process is activated and the mozzarella releases water and loses weight. This osmotic process is actually always present but becomes more consistent as the preserving liquid increases. As the preserving liquid has a higher salinity than the mozzarella, because of the gradient of salt concentration, the mozzarella releases water through osmosis, attempting to rebalance the salinity level between the mozzarella and the preserving liquid.

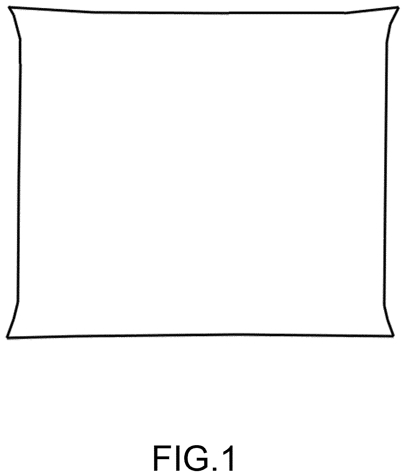

In the state of the art, several types of packaging for dairy products are known. However, in relation to mozzarella, the most common type of packaging is the so-called "pillow" packaging, in the "flat pillow" variant (Fig. 1). For the sake of completeness, the existence of the pillow packaging in the "pillow with tuft" variant should also be mentioned, although said variant is not relevant for the purposes of this discussion.

As mentioned above, pillow packages are made of a flexible polymeric material that deforms upon contact with a supporting surface or when grasped by a user. Disadvantageously, the flexibility and consequent deformability of the pillow package does not allow for an optimal ratio of 1:1 between the mozzarella and the preserving liquid, and at the same time does not allow the mozzarella to remain submerged in the preserving liquid.

In this regard, there is a tendency to add too much preserving liquid to pillow packages in order to submerge the mozzarella.

An example of a packaging machine according to the state of the art is described in US10737813B2, wherein a packaging machine for dry foods, such as breakfast cereals or the like, is disclosed. Such a packaging machine is equipped with a forming tube of which the outlet section is quadrangular in shape; however, the dairy product, for example a mozzarella cheese, may not pass through said quadrangular cross section and remains blocked. Moreover, also in US10737813B2 the presence of at least a pair of flaps opposite each other and hinged to the outlet section of the forming tube is illustrated. These flaps, when in the closed position, protect the polymeric film because, by stopping the dry food from falling, they prevent the direct impact of the food against the film from damaging said film. Even if the packaging machine described in US10737813B2 were used to bag a mozzarella cheese, said operation would not maintain the 1:1 weight ratio of the mozzarella cheese to the preserving liquid and, at the same time, keep the mozzarella cheese submerged in said preserving liquid. The object of this invention is to propose a machine and a method for packaging dairy products capable of solving, at least in part, the drawbacks mentioned above, i.e., capable of making a package wherein the dairy product and the preserving liquid are added in a ratio of 1:1, while ensuring that the mozzarella remains submerged. Said object is achieved with a machine for packaging dairy products according to claims 1 or 2, and with a method for packaging dairy products according to claim 13. The dependent claims describe preferred embodiments of the invention.

The features and advantages of the machine and method for packaging dairy products according to the invention will become apparent from the following detailed description of its preferred embodiments, given by way of non-limiting example, with reference to the accompanying figures, wherein:
- Fig. 1 is a "pillow" package in the "flat pillow" variant, according to the state of the art;

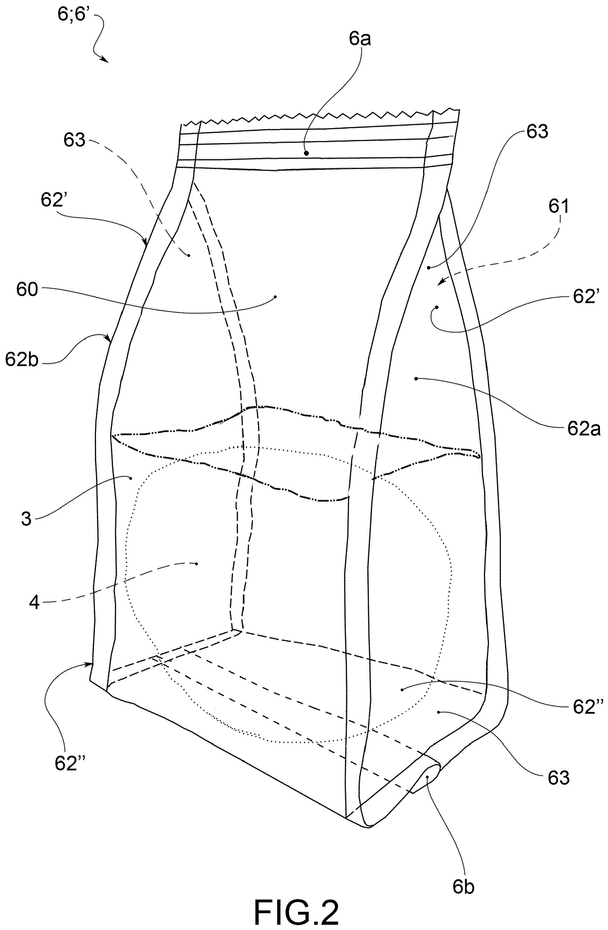

- Fig. 2 is a package obtained with a machine for packaging dairy products according to this invention;
- Fig. 3-3c' are side views of the machine during the packaging of a dairy product;
- Fig. 4a-4b are sequential perspective views of the machine during packaging of the dairy product;
- Fig. 5 is a side view of the machine for packaging dairy products in an embodiment, and
- Fig. 6 is a perspective detail view of adjustment means according to an embodiment.

In the following description, elements common to the various embodiments represented in the drawings are indicated with the same reference numbers.

In said drawings, a machine for packaging dairy products, e.g., mozzarella cheese, according to the invention has been collectively indicated with 1.

In a general embodiment, the machine 1 for packaging dairy products comprises a forming tube 2 and a welding apparatus 7.

The forming tube 2 is substantially cylindrical in shape, extends along a tube axis V between a first end 2a and a second end 2b, and internally delimits a cavity 20 suitable for the passage of a preserving liquid 3 and at least one dairy product 4, such as a mozzarella cheese. Further, the forming tube 2 is suitable to be wrapped by a film 5 for producing a package 6 for the dairy product 4.

The package 6 is hermetically sealed by a lower edge 6b and an upper edge 6a so as to contain the preserving liquid 3 and the dairy product 4.

The forming tube 2 is also provided with adjustment means 21 for controlling the passage of the dairy product 4 exiting from the forming tube 2. Said adjustment means 21 are movable between an open position, for the transit of the dairy product 4, and a closed position.

The welding apparatus 7 comprises at least a pair of welding heads 7a, 7b, or a welding head and an abutment head, and is arranged downstream of the adjustment means 21 orthogonally to the tube axis V.

The welding apparatus 7 is configured to weld the film 5 so as to obtain the package 6 for the at least one dairy product 4. Further, said welding apparatus 7 is movable between an inactive position, wherein the two welding heads 7a, 7b, or the welding head and the abutment head, are spaced apart, and an active position, wherein the two welding heads 7a, 7b, or the welding head and the abutment head, cooperate to weld the lower edge 6b and/or the upper edge 6a.

When the two welding heads 7a, 7b are in the active position for welding the lower edge 6b and/or the upper edge 6a, the adjustment means 21 are in the closed position.

Further, the mutual distancing of the two welding heads 7a, 7b in the inactive position allows the free-falling dairy product 4 to arrange the adjustment means 21 in the open position.

In a further general embodiment, the machine 1 for packaging dairy products comprises a forming tube 2 and a welding apparatus 7.

The forming tube 2 is substantially cylindrical in shape, extends along a tube axis V between a first end 2a and a second end 2b, and internally delimits a cavity 20 suitable for the transit of a preserving liquid 3 and at least one dairy product 4, such as a mozzarella cheese. In addition, the forming tube 2 is suitable to be wrapped by a film 5 for making a package 6 for the dairy product 4. In particular, said film 5 is circumferentially wrappable about the outer cylindrical side wall of the forming tube 2.

The package 6 is hermetically sealed by a lower edge 6b and an upper edge 6a so as to contain the preserving liquid 3 and the dairy product 4.

The forming tube 2 is also provided with adjustment means 21 to control the passage of the dairy product 4 within the forming tube 2. Said adjustment means 21 are movable between an open position, for the transit of the dairy product 4, and a closed position, for blocking the dairy product 4.

The welding apparatus 7 comprises at least a pair of welding heads 7a, 7b or a welding head and an abutment head, and is arranged downstream of the adjustment means 21 orthogonal to the tube axis V.

The welding apparatus 7 is configured to weld the film 5 so as to obtain the package 6 for the at least one dairy product 4. In addition, said welding apparatus 7 is movable between an inactive position, wherein the two welding heads 7a, 7b, or the welding head and the abutment head, are spaced apart from each other, and an active position, wherein the two welding heads 7a, 7b, or the welding head and the abutment head, cooperate in welding the lower edge 6b and/or the upper edge 6a.

The welding apparatus 7 and the adjustment means 21 are controllable so that when the two welding heads 7a, 7b are in the active position for performing the welding of the lower edge 6b and/or the upper edge 6a, the adjustment means 21 are in the closed position for holding the dairy product 4.

Further, the welding apparatus 7 and the adjustment means 21 are controllable in such a way that the mutual distancing of the two welding heads 7a, 7b in the inactive position allows the controlled passage of the dairy product 4 through the adjustment means 21.

In an embodiment, the machine 1 is suitable to produce the package 6 for the dairy product 4, where said package 6 comprises a front wall 60, a rear wall 61, and a pair of side walls 62a, 62b.

Further, the machine 1 comprises at least a pair of bellow brackets 8a, 8b, preferably in a "C" or "horseshoe" shape, facing each other and angularly spaced 90° with respect to the pair of welding heads 7a, 7b.

Each bracket of said pair of bellow brackets 8a, 8b comprises a lower arm 80b and an upper arm 80a incident to the tube axis V.

Preferably, in the embodiment wherein each bracket is C-shaped, the lower arms 80b and upper arms 80a are parallel to each other and orthogonal to the tube axis V.

Each bracket is also translatable between an inoperative position, which is associated with the inactive position of the welding apparatus 7 and wherein the brackets are spaced apart from each other without being engageable to the film 5, and an operative position, wherein the lower arm 80b and the upper arm 80a are suitable to engage the film 5 to fold said film 5 toward the inside of the package 6.

In particular, when the welding apparatus 7 is in the active position, in welding the lower edge 6b and/or the upper edge 6a, it further forms a bellow pocket 63 at an end portion 62'; 62" of each side wall of the pair of side walls 62a, 62b.

Specifically, in the inoperative position, the brackets are spaced apart from each other and are not engageable to the film 5; however, in the operative position, the lower arms 80b and upper arms 80a engage the film, pressing it into the package 6, so that, during the welding of the lower edge 6b and/or the upper edge 6a, bellow pockets 63 are formed at each end portion 62'; 62" of each side wall.

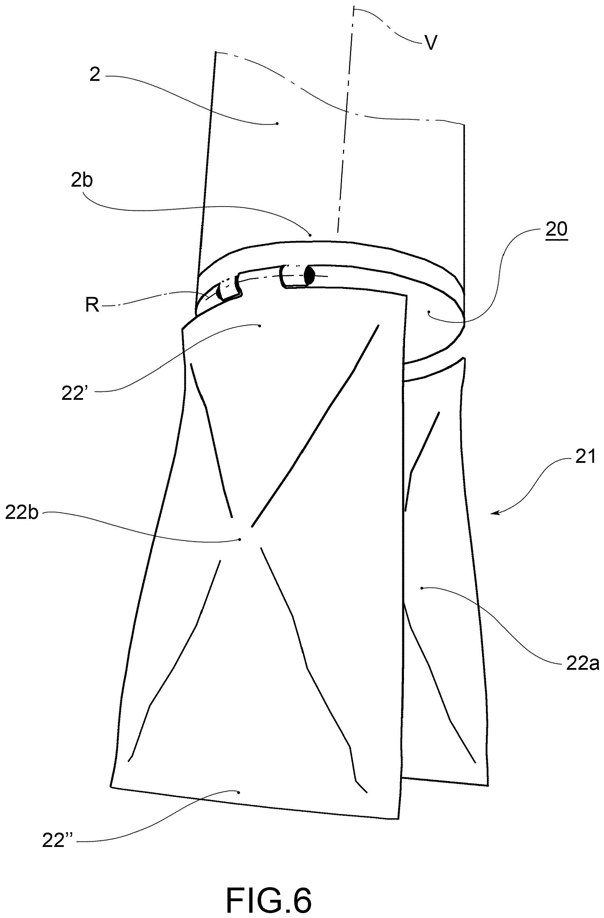

According to an embodiment, the machine 1 comprises at least a reel of the film 5 to be wrapped around the forming tube 2 for the production of the package 6. In other words, the machine 1 also comprises the film 5. According to an embodiment shown in Fig. 6, the adjustment means 21 comprise at least a pair of tilting vanes 22a, 22b facing each other. Specifically, each tilting vane of said pair of tilting vanes 22a, 22b is freely rotationally engaged to the second end 2b, so as to rotate, between the open position and the closed position, about a vane rotation axis R that is incident, preferably orthogonal, to the direction defined by the tube axis V.

Preferably, the vane rotation axis R is curvilinear. In an embodiment, each tilting vane 22a; 22b extends along a vane axis P between a tube engagement end 22' and a free end 22". The free end 22" of each tilting vane 22a; 22b converges towards the tube axis V in the closed position with a closing convergence angle α measured between the vane axis P and the tube axis V. On the other hand, in the open position, the free end 22" is arranged parallel to or converging toward the tube axis V with an opening convergence angle α', measured between the vane axis P and the tube axis V, wherein said opening convergence angle α' is of smaller width with respect to the closing convergence angle α.

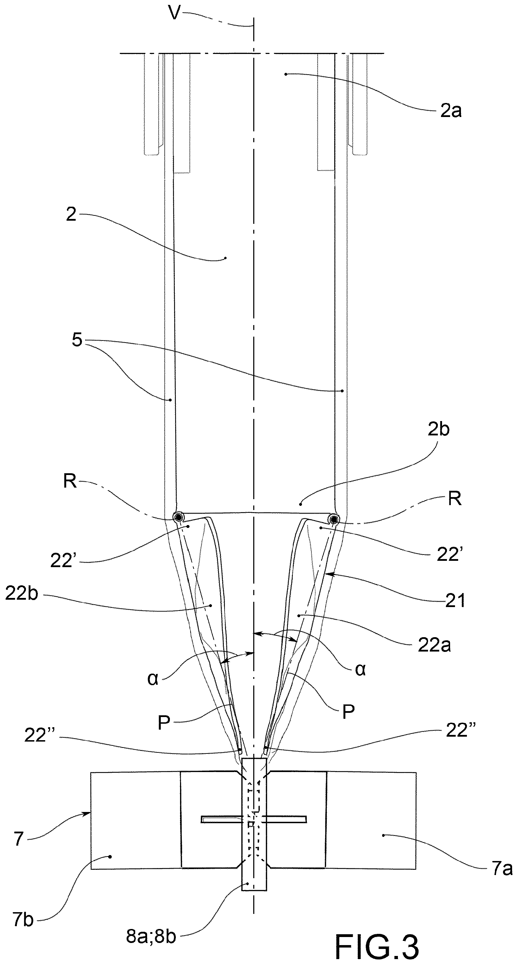

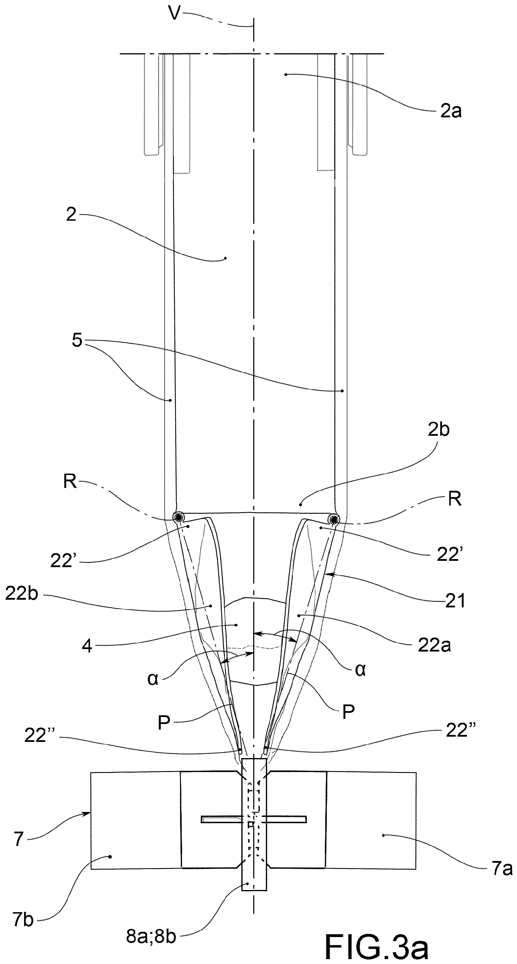

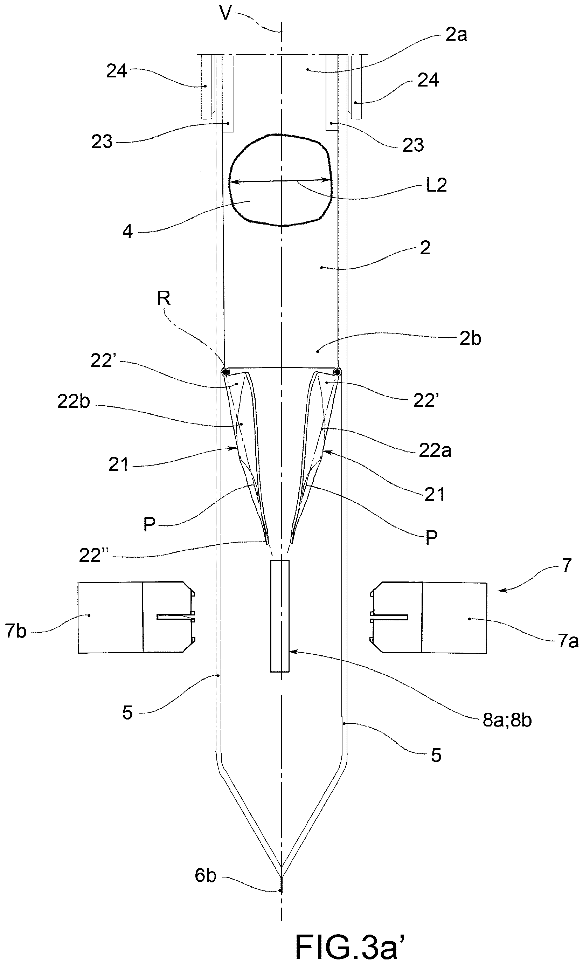

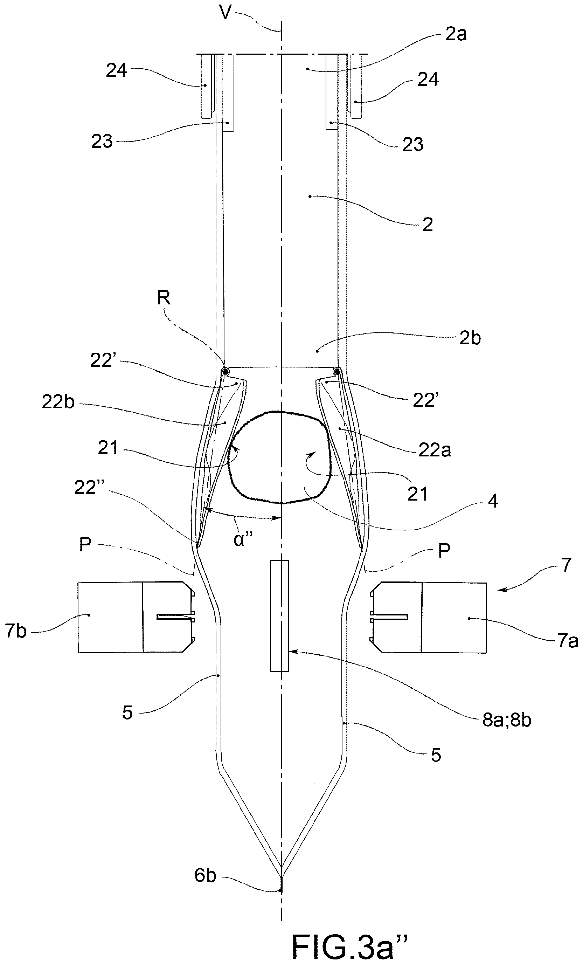

In an embodiment, in the open position and when the dairy product is very large, the free end 22" is arranged divergent from the tube axis V with an opening divergence angle α" measured between the vane axis P and the tube axis V (Fig. 3a").

Preferably, the tube engagement end 22' is delimited by a circular edge having the shape of a circular arc to hinge to the second end 2b of the cylindrical forming tube 2, while the free end 22" is delimited by a straight edge. The different shape of the circular edge from the straight edge is due to the fact that the geometry of each tilting vane 22a; 22b allows for a change from the circular cross section of the forming tube 2 to a square cross section in order to obtain the shape of the package 6. In other words, the pair of tilting vanes 22a, 22b does not have the function of holding or blocking the dairy product 4 but rather serves to change from the circular cross section of the forming tube 2 to a square cross section necessary to obtain the package 6 of the dairy product 4.

According to an embodiment, in the translation from the inactive position to the active position, the pair of welding heads 7a, 7b is suitable to drive the adjustment means 21 by moving them to the closed position. Further, with the translation from the active position to the inactive position of the two welding heads 7a, 7b, the adjustment means 21 are arranged in the open position due to the weight of the free-falling dairy product. According to an embodiment, the welding apparatus 7 is configured to command the movement of the adjustment means 21 so that, in the translation from the inactive position to the active position, the pair of welding heads 7a, 7b is suitable to drive the adjustment means 21 by moving them toward the closed position and, in the translation from the active position to the inactive position, the mutual distancing of the two welding heads 7a, 7b allows the adjustment means 21 to reach the open position.

Preferably, while the welding apparatus 7 is motorized, the adjustment means 21 are passively commandable.

In an embodiment, the adjustment means 21 keep the film 5 taut while preventing creasing or wrinkling. In the translation from the inactive position to the active position, the two welding heads 7a, 7b press against the film 5 to weld the lower edge 6b and/or the upper edge 6a and through the film 5 drive the adjustment means 21, moving them to the closed position. In other words, the adjustment means 21 are passively movable by the two welding heads 7a, 7b through the film 5.

According to an embodiment, in the translation from the inoperative position to the operative position, associated with the translation from the inactive position to the active position of the welding apparatus 7, the lower arm 80b of each bracket 8a; 8b presses the film 5 so as to form the bellow pocket 63 on each side wall 62a; 62b of the package 6 and to allow the welding apparatus 7 to weld the upper edge 6a. The upper arm 80a of each bracket 8a; 8b presses the film 5 so as to form the bellow pocket 63 on each side wall 62a; 62b of a subsequent package 6' and to allow the welding apparatus 7 to weld the lower edge 6b of said subsequent package 6' .

In an embodiment, the movement of the adjustment means 21 from the closed position to the open position is driven by the weight force exerted by the dairy product 4 on said adjustment means 21.

According to an embodiment, the weight force of the dairy product 4 drives the rotation of the pair of tilting vanes 22a, 22b about a respective vane rotation axis R, so that the pair of tilting vanes 22a, 22b is configured to spread apart by a transverse length L1 measured orthogonally to the tube axis V. In particular, said transverse length L1 is substantially equal to the maximum overall length L2 of the dairy product 4.

By way of example, the maximum overall length L2 of a generic mozzarella cheese is on average about 59.0 mm. Based on the average length of a generic mozzarella, the straight edge of the free end 22" of each tilting vane 22a; 22b is about 67.0 mm, so that the transverse length L1 may vary between 52.0 and 59.0 mm. Considering that the perimeter of the circular cross section of the forming tube is approximately 238.0 mm, and imagining that the transverse length L1 is equal to 52.0 mm, the perimeter of the squared section defined by the straight edge of the free end 22" of each tilting vane 22a; 22b and by the transverse length L1 is equal to (67.0 + 52.0) x 2, i.e., 238.0 mm. Through the numerical example given in this discussion, we have tried to explain how, by means of the pair of tilting vanes, it was possible to pass from a circular cross section of the forming tube to a square cross section having substantially the same perimeter.

In an embodiment, the transverse length L1 is greater than the maximum overall length L2 of the dairy product 4. In other words, when the mozzarella is very large, the transverse length L1 is greater than the maximum overall length L2 (Fig. 3a").

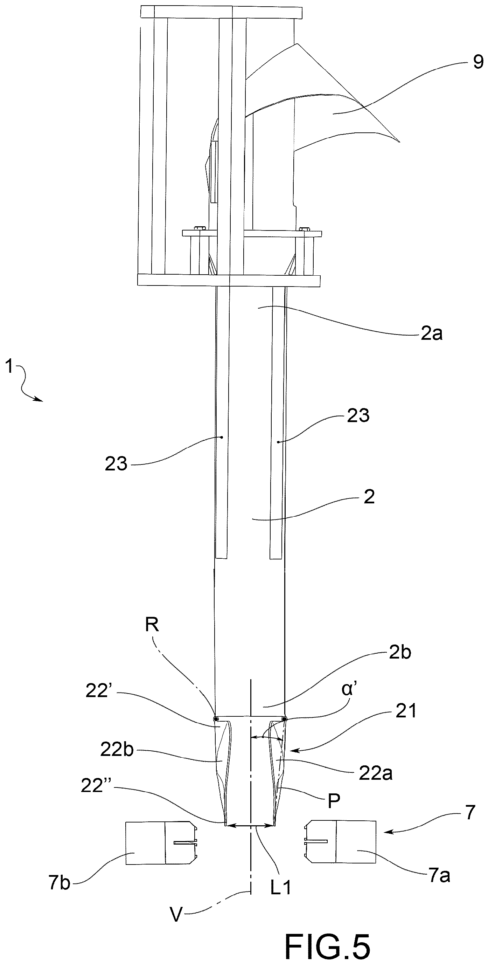

As illustrated in the appended Fig. 5, the machine 1 further comprises a forming collar 9 that aids in winding the film 5 about the forming tube 2.

The forming tube 2 is also provided with a plurality of ribs 23, preferably four, which protrude externally and are arranged symmetrically with respect to the tube axis V. Preferably, said ribs 23 are parallel to the tube axis V.

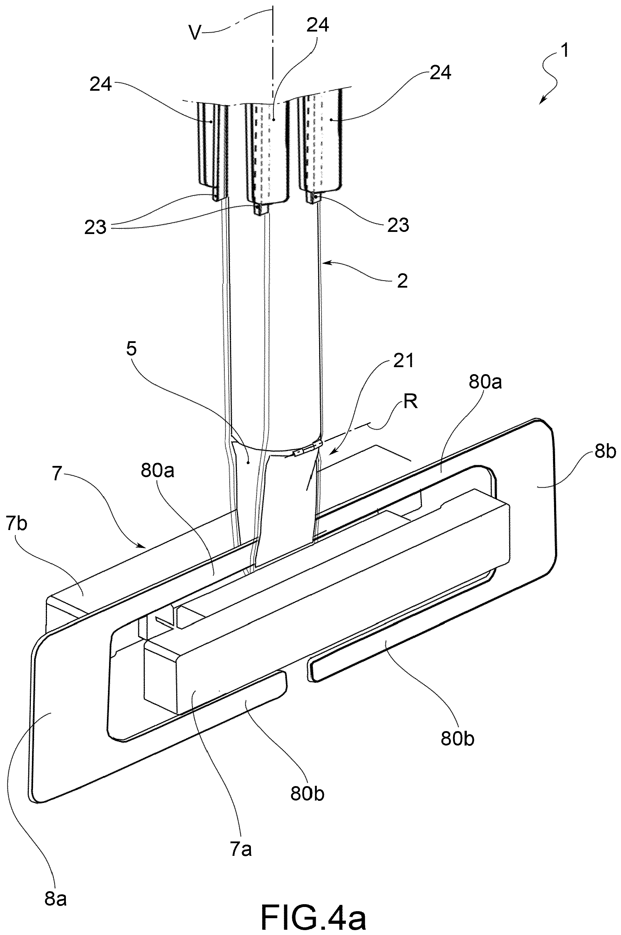

According to the appended Fig. 4a, the machine 1 further comprises a plurality of vertical welding apparatuses 24 in a number equal to the plurality of ribs 23, so that each vertical welding apparatus of said plurality of vertical welding apparatuses 24 faces a respective rib of said plurality of ribs 23. In particular, the vertical welding apparatuses 24 make vertical welds between the front wall 60 and the side walls 62a, 62b, and between the rear wall 61 and the side walls 62a, 62b. According to an aspect of the invention, a method for packaging dairy products is also proposed. The operation of this method comprises the following steps, which are not necessarily listed in chronological order of execution.

The machine 1 is provided for packaging dairy products, wherein said machine 1 comprises at least a reel of film 5 and film dragging means (not shown in the figure), for example belts or chains.

The film 5 is unwound from the reel and said film 5 is wrapped about the forming tube 2.

In an embodiment, the unwinding and winding of the film 5 about the forming tube 2 is a process that occurs continuously, without any interruption.

The film 5 is slid about the forming tube 2 from the first end 2a toward the second end 2b by means of the film dragging means.

Considering the machine 1 under operating conditions, i.e. in working condition, the first end 2a is above or upstream with respect to the second end 2b which is positioned below or downstream. In other words, when the machine 1 is in operating condition, the forming tube 2 is arranged vertically.

According to the appended Fig. 3a and 4a, the welding apparatus 7 is moved from the inactive position to the active position in such a way that, during the mutual approaching of the two welding heads 7a, 7b, the film 5 is drawn by the motion of the two welding heads 7a, 7b and the movement of the adjustment means 21 from the open position to the closed position is driven by the two welding heads 7a, 7b through the film 5.

The lower edge 6b of the package 6 for the dairy product 4 is welded.

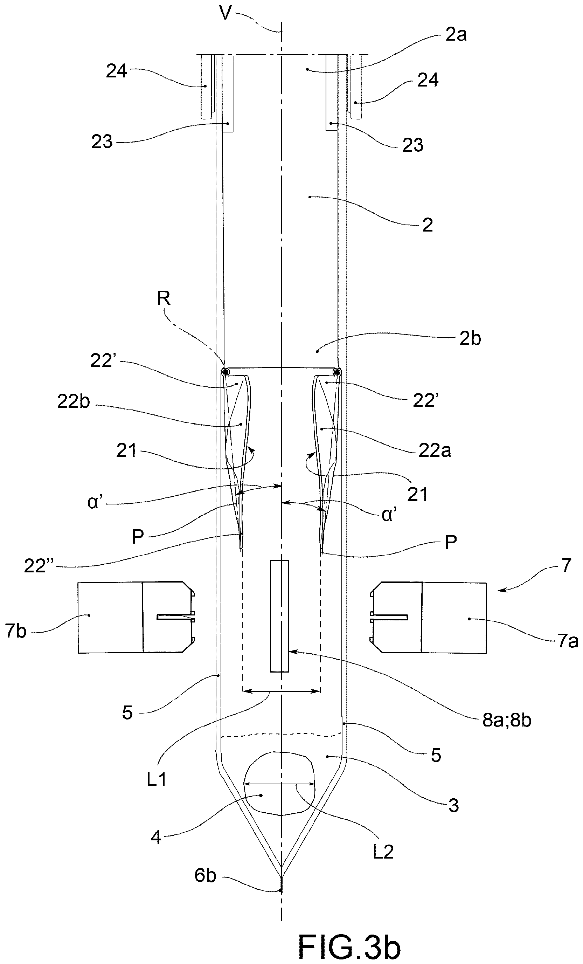

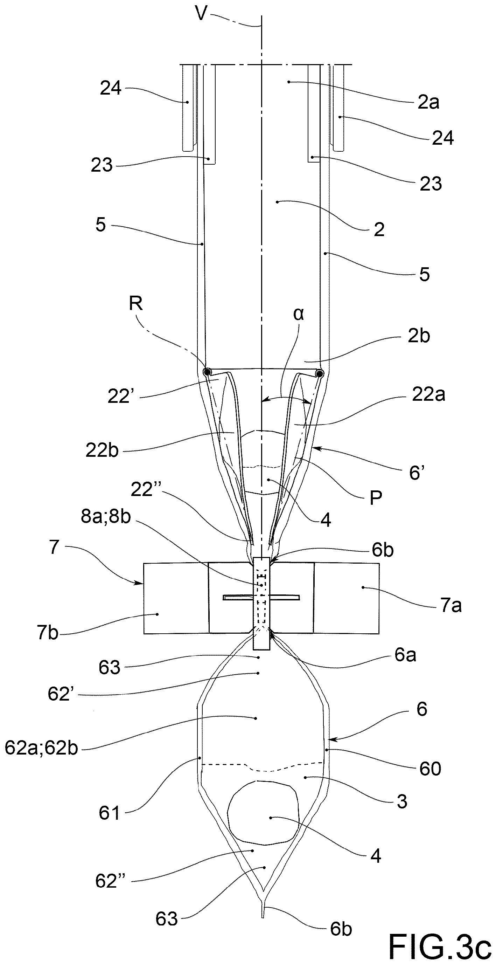

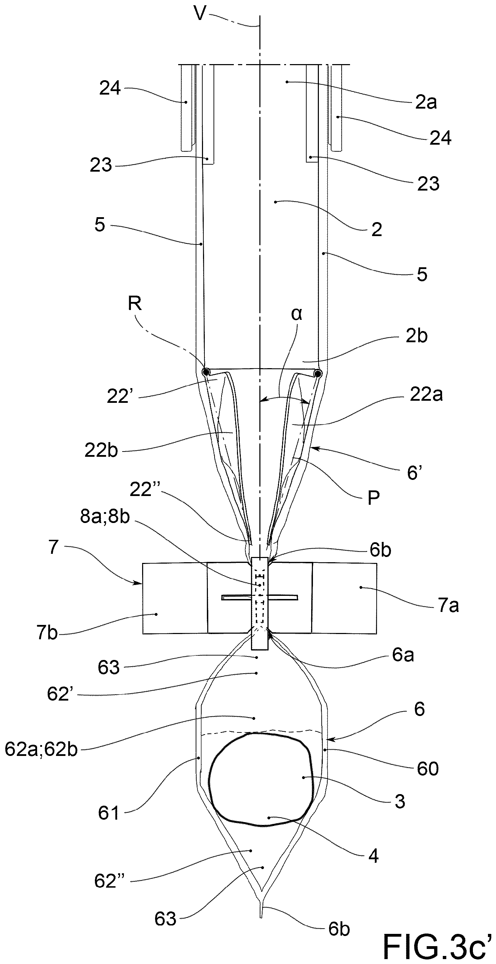

The film 5 slides about the adjustment means 21 so that the lower edge 6b of the package 6 slides down. In particular, the film 5 is slid by the film dragging means and moves away from the second end 2b by moving downward. When the welding apparatus 7 is in the active position and the adjustment means 21 are in the closed position, the dairy product may be placed between the pair of tilting vanes 22a, 22b (Fig. 3a) or the forming tube 2 may be without the dairy product (Fig. 3).

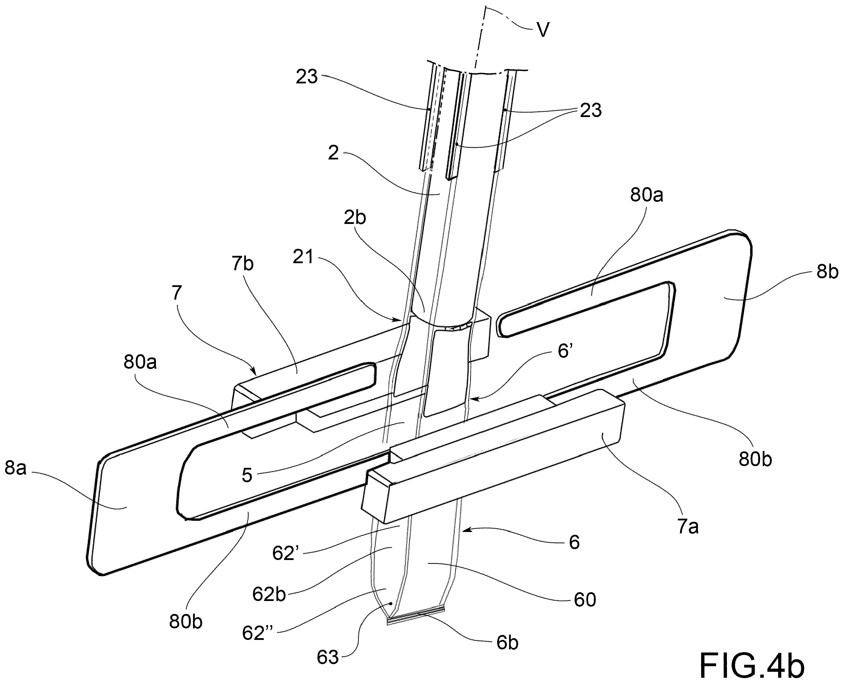

According to the appended Fig. 3b and 4b, the welding apparatus 7 is moved from the active position to the inactive position by moving the two welding heads 7a, 7b away from each other. The adjustment means 21 are arranged in the open position. In particular, the movement of the adjustment means 21 is passive and is driven by the weight force of the dairy product 4.

The package 6 is filled with the preserving liquid 3 and the dairy product 4.

When the welding apparatus 7 translates from the active position to the inactive position and the two welding heads 7a, 7b move away from each other, the dairy product may begin its fall along the forming tube (Fig. 3a') or, if the dairy product was already positioned between the pair of tilting vanes 22a, 22b, it may spread the tilting vanes 22a, 22b apart due to its weight force.

In the case wherein the product is falling along the forming tube (Fig. 3a'), subsequently the weight force of the dairy product will spread the pair of tilting vanes 22a, 22b apart (Fig. 3a").

According to the appended Fig. 3c, the welding apparatus 7 is moved again from the inactive position to the active position in such a way that, by dragging the film 5 as the two welding heads 7a, 7b approach each other, the adjustment means 21 move from the open position to the closed position. In particular, said adjustment means 21 are driven by the two welding heads 7a, 7b through the film 5.

The upper edge 6a of the package 6 and the lower edge 6b of a subsequent package 6' are welded.

When the welding apparatus 7 translates from the inactive position to the active position, the adjustment means 21 pass from the open position to the closed position and the dairy product may be placed between the pair of tilting vanes 22a, 22b (Fig. 3c) or the forming tube 2 may be without the dairy product (Fig. 3c').

According to an embodiment of the method, during the movement of the welding apparatus 7 from the active position to the inactive position, the mutual distancing between the two welding heads 7a, 7b allows the dairy product 4 to spread the adjustment means 21 and arrange them in the open position, so as to allow the passage by gravity of the dairy product 4.

In an embodiment, the machine 1 comprises at least a pair of bellow brackets 8a, 8b that face each other and are angularly spaced 90° apart with respect to the pair of welding heads 7a, 7b. Each bracket of said pair of bellow brackets 8a, 8b further comprises a lower arm 80b and an upper arm 80a that are incident to the tube axis V. The method also comprises the step wherein the pair of bellow brackets 8a, 8b move from the inoperative position, wherein the brackets are spaced apart from each other without being engaged to the film 5, to the operative position, wherein the lower arm 80b and the upper arm 80a respectively engage the film 5 by folding it inwardly into the package 6, so that when the welding apparatus 7 is in the active position to weld the lower edge 6b and/or the upper edge 6a, a bellow pocket 63 is formed at both the lower arm 80b and the upper arm 80a due to the folding of the film 5. After the lower edge 6b and/or upper edge 6a are welded, the pair of bellow brackets 8a, 8b are moved from the operative position to the inoperative position.

According to an embodiment of the method, the welding apparatus 7 further comprises a cutter so that, after welding the upper edge 6a of the package 6 and welding the lower edge 6b of the subsequent package 6', the hermetically sealed package 6 is separated from the subsequent package 6' by means of said cutter. Innovatively, the machine and method for packaging dairy products fulfill the intended object.

According to an advantageous aspect, the machine that is the object of this invention makes it possible to obtain a package wherein the weight ratio of the dairy product to the preserving liquid is 1:1 and wherein the dairy product remains submerged in the liquid. Therefore, the mozzarella does not absorb water, does not release milk and, above all, does not oxidize.

Advantageously, the machine object of this invention makes it possible to obtain a package, the internal volume of which is less than the internal volume of the pillow package according to the state of the art. According to an advantageous aspect, due to the presence of the pair of tilting vanes, it is possible to package the dairy product in the package which has a smaller internal volume than the internal volume of the pillow package.

According to a still further advantageous aspect, the machine that is the object of this invention makes it possible to obtain a packaged dairy product with a shelf-life longer or at least comparable to that of mozzarella bags according to the state of the art. Advantageously, the machine that is the object of this invention allows for the film consumption to be minimized, since the presence of the pair of tilting vanes favors a reduced consumption of film, ensuring that the ratio between the dairy product and the preserving liquid is 1:1 and that the mozzarella remains submerged. It is clear to the person skilled in the art that if the vanes were diverging outwards, or parallel to the tube axis, the film consumption would be higher. A person skilled in the art, in order to meet contingent needs, may make changes, adaptations, and replacements of elements with others functionally equivalent to the embodiments of the machine and method for packaging dairy products according to the invention, without departing from the scope of protection of the following claims. Each of the features described as belonging to a possible embodiment may be obtained independently of the other described embodiments.

## Claims

1. A machine (1) for packaging dairy products, for example mozzarella, comprising:
- a forming tube (2) of a substantially cylindrical shape extending along a tube axis (V) between a first end (2a) and a second end (2b), and internally delimiting a cavity (20) suitable for the passage of a preserving liquid (3) and of at least one dairy product (4), said forming tube (2) being suitable to be wrapped by a film (5) for the production of a package (6) for the dairy product (4), said package (6) being hermetically sealed by a lower edge (6b) and by an upper edge (6a) so as to contain the preserving liquid (3) and the dairy product (4), the forming tube (2) being further provided with adjustment means (21) for controlling the passage of the dairy product (4) exiting from the forming tube (2), wherein said adjustment means (21) are movable between an open position, for the passage of the dairy product (4), and a closed position;
- a welding apparatus (7), comprising at least one pair of welding heads (7a, 7b) or a welding head and an abutment head, arranged downstream of the adjustment means (21) and orthogonal to the tube axis (V), the welding apparatus (7) being configured to weld the film (5) so as to obtain the package (6) for the at least one dairy product (4), said welding apparatus (7) being movable between an inactive position, wherein the two welding heads (7a, 7b), or the welding head and the abutment head, are spaced apart from each other, and an active position, wherein the two welding heads (7a, 7b), or the welding head and the abutment head, cooperate to weld the lower edge (6b) and/or the upper edge (6a),
wherein, when the two welding heads (7a, 7b) are in the active position for welding the lower edge (6b) and/or the upper edge (6a), the adjustment means (21) are in the closed position,
and wherein the mutual distancing of the two welding heads (7a, 7b) in the inactive position allows the dairy product (4) in free fall to arrange the adjustment means (21) in the open position.

2. A machine (1) for packaging dairy products, for example mozzarella, comprising:
- a forming tube (2) having a substantially cylindrical shape extending along a tube axis (V) between a first end (2a) and a second end (2b), and delimiting internally a cavity (20) suitable for the passage of a preserving liquid (3) and at least one dairy product (4), said forming tube (2) being suitable to be wrapped by a film (5) for making a package (6) for the dairy product (4), said package (6) being hermetically sealed by a lower edge (6b) and an upper edge (6a) so as to contain the preserving liquid (3) and the dairy product (4), the forming tube (2) being further provided with adjustment means (21) for controlling the passage of the dairy product (4) inside the forming tube (2), wherein said adjustment means (21) are movable between an open position, for the passage of the dairy product (4), and a closed position, for blocking the dairy product (4);
- a welding apparatus (7), comprising at least a pair of welding heads (7a, 7b), or a welding head and an abutment head, arranged downstream of the adjustment means (21) and orthogonal to the tube axis (V), said welding apparatus (7) being configured to weld the film (5) so as to obtain the package (6) for the at least one dairy product (4), said welding apparatus (7) being movable between an inactive position, wherein the two welding heads (7a, 7b), or the welding head and the abutment head, are spaced apart from each other, and an active position, wherein the two welding heads (7a, 7b), or the welding head and the abutment head, cooperate to weld the lower edge (6b) and/or the upper edge (6a),
wherein the welding apparatus (7) and the adjustment means (21) are controllable so that, when the two welding heads (7a, 7b) are in the active position for welding the lower edge (6b) and/or the upper edge (6a), the adjustment means (21) are in the closed position for retaining the dairy product (4),
and wherein the welding apparatus (7) and the adjustment means (21) are further controllable in such a way that the mutual distancing of the two welding heads (7a, 7b) in the inactive position allows the controlled passage of the dairy product (4) through the adjustment means (21).

3. The machine (1) according to claim 1 or 2, wherein said machine is suitable to produce the package (6) for the dairy product (4), wherein said package (6) comprises a front wall (60), a rear wall (61) and a pair of side walls (62a, 62b),
the machine comprising at least a pair of bellow brackets (8a, 8b), preferably in a "C" or "horseshoe" shape, facing each other and angularly spaced apart by 90° with respect to the pair of welding heads (7a, 7b), each bracket of said pair of bellow brackets (8a, 8b) comprising a lower arm (80b) and an upper arm (80a) incident to the tube axis (V), each bracket being further translatable between an inoperative position, associated with the inactive position of the welding apparatus (7) and wherein the brackets are spaced apart from each other without being engageable with the film (5), and an operative position, wherein the lower arm (80b) and the upper arm (80a) are suitable to engage the film (5) to fold said film (5) towards the inside of the package (6), so that the welding apparatus (7) in the active position, forming the lower edge (6b) and/or the upper edge (6a), forms a bellow pocket (63) at an end portion (62'; 62") of each side wall of the pair of side walls (62a, 62b).

4. The machine (1) according to any of the preceding claims, comprising at least a reel of the film (5) to be wound about the forming tube (2) for producing the package (6).

5. The machine (1) according to any of the preceding claims, wherein the adjustment means (21) comprise at least a pair of tilting vanes (22a, 22b) facing each other, wherein each tilting vane of said pair of tilting vanes (22a, 22b) is freely rotationally engaged with the second end (2b), so as to rotate, between the open position and the closed position, about a vane rotation axis (R) which is incident, and preferably orthogonal, to the direction defined by the tube axis (V), moreover said vane rotation axis being preferably curvilinear.

6. The machine (1) according to the preceding claim, wherein each tilting vane (22a; 22b) extends along a vane axis (P) between a tube engagement end (22') and a free end (22"), the free end (22") of each tilting vane (22a; 22b) converging towards the tube axis (V) in the closed position with a closing convergence angle (α) measured between the vane axis (P) and the tube axis (V) and, in the open position, being arranged parallel or converging towards the tube axis (V) with an opening convergence angle (α') measured between the vane axis (P) and the tube axis (V), wherein said opening convergence angle (α') has a smaller width with respect to the closing convergence angle (α).

7. The machine (1) according to the preceding claim, wherein in the open position, when the dairy product is very large, the free end (22") of each tilting vane (22a; 22b) diverges from the tube axis (V) with an opening divergence angle (α") measured between the vane axis (P) and the tube axis (V).

8. The machine (1) according to any of the preceding claims, wherein in the translation from the inactive position to the active position the pair of welding heads (7a, 7b) is suitable to drive the adjustment means (21) by moving them toward the closed position, and wherein with the translation from the active position to the inactive position of the two welding heads (7a, 7b), the adjustment means (21) are arranged in the open position due to the weight of the dairy product in free fall.

9. The machine (1) according to any of the preceding claims, wherein the welding apparatus (7) is configured to command the movement of the adjustment means (21), so that in the translation from the inactive position to the active position, the pair of welding heads (7a, 7b) is suitable to drive the adjustment means (21), moving them towards the closed position, and in the translation from the active position to the inactive position, the mutual distancing of the two welding heads (7a, 7b) allows the adjustment means (21) to reach the open position.

10. The machine (1) according to claim 4 in combination with claims 8 or 9, wherein the adjustment means (21) keep the film (5) taut avoiding the formation of creases or wrinkles and wherein, in the translation from the inactive position to the active position, the two welding heads (7a, 7b) press against the film (5) to weld the lower edge (6b) and/or the upper edge (6a) and, through the film (5), drive the adjustment means (21) moving them towards the closed position.

11. The machine (1) according to claims 3 and 10, wherein in the translation from the inoperative position to the operative position, associated with the translation from the inactive position to the active position of the welding apparatus (7), the lower arm (80b) of each bracket (8a; 8b) presses the film (5) so as to form the bellow pocket (63) on each side wall (62a; 62b) of the package (6) and to allow the welding apparatus (7) to form the upper edge (6a), the upper arm (80a) of each bracket (8a; 8b) presses the film (5) so as to form the bellow pocket (63) on each side wall (62a; 62b) of a subsequent package (6') and to allow the welding apparatus (7) to form the lower edge (6b) of said subsequent package (6').

12. The machine (1) according to any of the preceding claims, wherein the movement of the adjustment means (21) from the closed position to the open position is driven by the weight force exerted by the dairy product (4) on said adjustment means (21).

13. The machine (1) according to any of the preceding claims in combination with claims 5 and 12, wherein the weight force of the dairy product (4) drives the rotation of the pair of tilting vanes (22a, 22b) about the respective vane rotation axis (R), so that the pair of tilting vanes (22a, 22b) is configured to spread apart by a transverse length (L1) measured orthogonal to the tube axis (V), wherein said transverse length (L1) is substantially equal to the maximum overall length (L2) of the dairy product (4).

14. A method for packaging dairy products, comprising the following steps, not necessarily in chronological order of execution:
- providing a machine (1) for packaging dairy products according to any of the preceding claims, said machine (1) comprising at least a reel of the film (5) and film dragging means, for example, belts or chains;
- unrolling the film (5) from the reel and winding said film (5) about the forming tube (2);
- sliding the film (5) about the forming tube (2) from the first end (2a) towards the second end (2b) by means of the film dragging means;
- moving the welding apparatus (7) from the inactive position to the active position so that, during the mutual approaching of the two welding heads (7a, 7b), the film (5) is drawn by the motion of the two welding heads (7a, 7b), and the movement of the adjustment means (21) from the open position to the closed position is driven by the two welding heads (7a, 7b) through the film (5);
- welding the lower edge (6b) of the package (6) for the dairy product (4);
- sliding the film (5) about the adjustment means (21), so that the lower edge (6b) of the package (6) slides downwards;
- moving the welding apparatus (7) from the active position to the inactive position by distancing the two welding heads (7a, 7b) from each other;
- arranging the adjustment means (21) in the open position;
- filling the package (6) with the preserving liquid (3) and the dairy product (4);
- moving the welding apparatus (7) again from the inactive position to the active position so that, by dragging the film (5) when approaching the two welding heads (7a, 7b), the adjustment means (21) pass from the open position to the closed position, said adjustment means (21) being driven by the two welding heads (7a, 7b) through the film (5);
- welding the upper edge (6a) of the package (6) and the lower edge (6b) of a subsequent package (6').

15. The method according to the preceding claim, wherein, during the movement of the welding apparatus (7) from the active position to the inactive position, the mutual distancing between the two welding heads (7a, 7b) allows the dairy product (4) to spread the adjustment means (21) apart and place them in the open position, so as to allow the passage, by gravity, of the dairy product (4).

16. The method according to claim 14 or 15, wherein the machine (1) comprises at least a pair of bellow brackets (8a, 8b) facing each other and angularly spaced by 90° with respect to the pair of welding heads (7a, 7b), each bracket of said pair of bellow brackets (8a, 8b) comprising a lower arm (80b) and an upper arm (80a) incident to the tube axis (V), said method further comprising the steps of:
- moving the pair of bellow brackets (8a, 8b) from the inoperative position, wherein the brackets are spaced apart from each other without being engaged with the film (5), to the operative position, wherein the lower arm (80b) and the upper arm (80a) respectively engage the film (5) folding it towards the inside of the package (6), so that, when the welding apparatus (7) is in the active position to form the lower edge (6b) and/or the upper edge (6a), at both the lower arm (80b) and the upper arm (80a), a bellow pocket (63) is formed due to the folding of the film (5);
- after the step of welding the lower edge (6b) and/or the upper edge (6a), moving the pair of bellow brackets (8a, 8b) from the operative position to the inoperative position.

17. The method according to any of claims 14 to 16, wherein the welding apparatus (7) further comprises a cutter so that, after welding the upper edge (6a) of the package (6) and welding the lower edge (6b) of the subsequent package (6'), the hermetically sealed package (6) is separated from the subsequent package (6') by means of said cutter.
